# EUROPEAN PATENT APPLICATION

(11) **EP 3 293 714 A1**
(43) Date of publication of application: **14.03.2018**
(21) Application number: 17190644.9
(22) Date of filing: 12.09.2017
(51) Int. Cl.: G07G 1/01

(54) **SALES DATA PROCESSING DEVICE**

(30) Priority: 12.09.2016 JP 2016177949
(71) Applicant: Toshiba TEC Kabushiki Kaisha, Tokyo 141-8562 (JP)
(72) Inventor: WATANABE, Osamu, Shinagawa-ku, Tokyo 141-8562 (JP)
(74) Representative: Takeuchi, Maya

(57) **Abstract**

A sales data processing device includes a casing, a first display unit, a second display unit and a reading unit. The casing has a first side surface facing in a first direction, a second side surface facing in a second direction, and a third side surface facing in a third direction that is orthogonal to the first and second directions. The first display unit is located on an upper surface of the casing so that a display screen thereof faces in the first direction. The second display unit is located on the upper surface of the casing so that a display screen thereof faces in the second direction. The reading unit is located on the third side surface, and configured to read identification information for identifying a commodity from the commodity which is subjected to a sales registration.

## Description

### FIELD

The present invention relates to a sales data processing technology in general, and embodiments described herein relate more particularly to a sales data processing device.

### BACKGROUND

In the related art, a point of sales (hereinafter a POS) terminal is used for commodity purchase registration in a retail store. Recently, in a store such as a supermarket, a self-checkout POS terminal is used in which a customer, as an operator, performs the sales data processing for a commodity.

Also in a retail store such as a convenience store, a salesperson is required to perform not only operations for the sales data processing of a commodity but also various kinds of work such as stocking of commodities or cleaning. Therefore, it is desired to also provide a self-checkout POS terminal in a retail store. However, it may be difficult to install both of a POS terminal and a self-checkout POS terminal in a retail store. In the related art, in this case, a POS terminal which faces toward a salesperson side when used by the salesperson and faces toward a customer side when used by the customer, is known. However, changing the direction of the POS terminal depending on the person who is using the POS terminal is cumbersome.

To solve such problems, there is provided a sales data processing device comprising:
a casing having a first side surface facing in a first direction, a second side surface facing in a second direction which is opposite to the first direction, and a third side surface facing a third direction orthogonal to the first and second directions;
a first display unit located on an upper surface of the casing so that a display screen thereof faces in the first direction;
a second display unit located on the upper surface of the casing so that a display screen thereof faces in the second direction; and
a reading unit located on the third side surface, and configured to read identification information for identifying a commodity from the commodity which is subjected to a sales registration.

Preferably, the device further comprises:
a control unit configured to display, on one of the first and second display units, an operation screen related to sales registration of the commodity corresponding to the identification information read by the reading unit, wherein
the control unit switches the display unit on which the operation screen is displayed between the first display unit and the second display unit.

Preferably still, the device further comprises:
a bag hanger located on the second side surface and configured to hang a bag thereon.

Preferably yet, the bag hanger includes a rod member that extends in the second direction.

In the above device, the reading unit is preferably located at the same height as that of the bag hanger.

Suitably, the device further comprises:
a printing unit configured to output a sheet, on which transaction details related to a single transaction are printed, in a direction orthogonal to the first and second directions.

In the above device, the reading unit is preferably located in the casing above the printing unit.

Also in the above device, the printing unit is preferably located on the third side surface.

Suitably still, the device further comprises:
a discharge port located on the third surface and configured to discharge the sheet on which transaction details related to a single transaction are printed.

Suitably yet, the device further comprises:
a settlement unit located in a space between the first display unit and the second display unit and configured to read information used for settlement related to a single transaction.

Suitably further, the settlement unit has a surface for reading information used for settlement related to a single transaction, the surface facing in a direction orthogonal to the first and second directions.

In the above device, the settlement unit is preferably located, on the top surface of the casing, at a side close to the third side surface.

Conveniently, the casing further has a fourth side surface opposing the third side surface, which is formed in an arc shape.

Conveniently still, the device further comprises:
a settlement unit located inside of the casing and configured to read information used for settlement related to a single transaction.

Conveniently yet, the device further comprises:
a printing unit that outputs a sheet, on which transaction details related to a single transaction are printed, in a direction orthogonal to the first and second direction; and
a settlement unit configured to read information used for settlement related to a single transaction, wherein
the reading unit, the printing unit and the settlement unit are spaced apart from each other in a vertical direction.

The invention also relates to a method for controlling a sales data processing device including a first display unit facing in a first direction, a second display unit facing in a second direction opposing to the first direction, and a reading unit configured to read identification information for identifying a commodity from the commodity which is subjected to a sales registration, comprising:
displaying an operation screen related to sales registration of a commodity corresponding to identification information read by the reading unit on one of the first and second display units, and
switching the display unit on which the operation screen is displayed between the first display unit and the second display unit.

Preferably, the method further comprises:
displaying a user interface configured to receive an operation input by an operator on one of the display units which is designated as the display for the operator;
receiving an operation, input onto the user interface, to switch the display unit on which the display for the operator is displayed; and
switching the display unit on which the operation screen is displayed between the first display unit and the second display unit when the operation input is received by the user interface.

Preferably still, the method further comprises:
when displaying the user interface to receive the operation input to switch the display unit on which the operation screen is displayed, displaying the user interface on the display unit which is designated as a display unit for the operator, and displaying the user interface for a customer on the display unit which is designated as a display unit for the customer.

Preferably yet, the user interface for the operator includes an explanation for an operator to operate the user interface.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view in which an exterior of a POS terminal according to an embodiment is viewed from a salesperson side.
FIG. 2 is a perspective view in which the exterior of the POS terminal is viewed from a customer side.
FIG. 3 is a block diagram illustrating an example of a hardware configuration.
FIG. 4 is a block diagram illustrating a characteristic functional configuration.
FIG. 5 depicts a flowchart of an example of a mode changing process.

### DETAILED DESCRIPTION

Embodiments provide a sales data processing device which can be used from either side.

In general, according to one embodiment, there is provided a sales data processing device including a casing, a first display unit, a second display unit and a reading unit. The casing has a first side surface facing in a first direction, a second side surface facing in a second direction which is opposite to the first direction, and a third side surface parallel with the first and second directions. The first display unit is located on an upper surface of the casing so that a display screen thereof faces in the first direction. The second display unit is located on the upper surface of the casing so that a display screen thereof faces in the second direction. The reading unit is located on the third side surface, and configured to read identification information for identifying a commodity from the commodity which is subjected to a sales registration.

Hereinafter, a detailed description will be made of an embodiment of a sales data processing device with reference to the accompanying drawings. The embodiment described below is one embodiment of a sales data processing device, and does not limit a configuration, a specification, and the like thereof. A sales data processing device according to the embodiment is an application example to a point of sales (POS) terminal which is provided in a store such as a convenience store and in which registration and settlement of a commodity in a single transaction are performed by a customer.

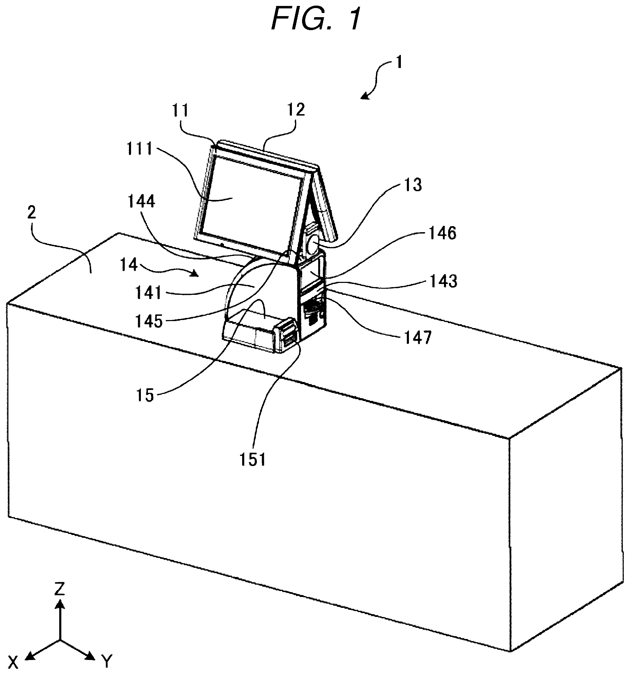

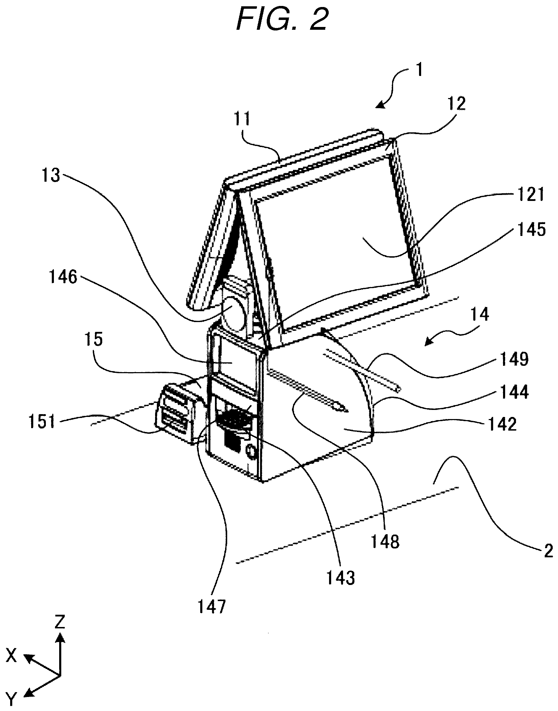

FIG. 1 is a perspective view in which an exterior of a POS terminal 1 according to an embodiment is viewed from a salesperson side. FIG. 2 is a perspective view in which the exterior of the POS terminal 1 according to the embodiment is viewed from a customer side. The POS terminal 1 includes a first display unit 11, a second display unit 12, a noncontact card reader and writer 13, a casing 14, and a card reader and writer 15.

The POS terminal 1 is mounted on, for example, a counter table 2. The counter table 2 is a table on which a shopping basket or a commodity is placed. If a salesperson operates the POS terminal 1, the salesperson faces a customer with the counter table 2 interposed therebetween.

The casing 14 is provided on the counter table 2. The casing 14 has a substantially box-like shape. The casing 14 has a first side surface 141, a second side surface 142, a third side surface 143, a fourth side surface 144, and an upper surface 145. As shown in FIG. 1, the first side surface 141 is a side surface orthogonal to an X direction and faces the salesperson side of the counter table 2, and corresponds to a front surface in the present embodiment. As shown in FIG. 2, the second side surface 142 is a side surface facing the customer side in an opposite direction to the first side surface 141, and corresponds to a rear surface in the present embodiment. In other words, the second side surface 142 is a side surface opposing the first side surface 141. The third side surface 143 is one of both side surfaces orthogonal to the first side surface 141 and the second side surface 142. The fourth side surface 144 is a side surface opposing the third side surface 143. The fourth side surface 144 is the other of the both side surfaces orthogonal to the first side surface 141 and the second side surface 142. The first display unit 11, the second display unit 12, and the noncontact card reader and writer 13 are located on the upper surface 145 of the casing 14.

The first display unit 11 is, for example, a liquid crystal display. The first display unit 11 is located so that a screen thereof faces the salesperson in the counter table 2. In other words, the first display unit 11 is located on the upper surface 145 of the casing 14, and a display screen thereof faces in a first side surface direction of the casing 14. Here, the first side surface direction is the X direction in which the first side surface 141 faces. The first display unit 11 displays commodity information or the like of a commodity which is purchased and registered to the salesperson or the like.

The first display unit 11 is provided with a first touch panel 111 used to operate the POS terminal 1. The first touch panel 111 detects a location operation (e.g., a touch) on the first display unit 11 performed by an operator, and determines that an operation corresponding to a display element, which is displayed on the first display unit 11 and is touched by the operator, is input. Consequently, the first touch panel 111 receives an operation input on a key with the key displayed on the first display unit 11 being operated.

The second display unit 12 is, for example, a liquid crystal display. The second display unit 12 is set so that a screen thereof faces the customer at the counter table 2. In other words, the second display unit 12 is located in back-to-back arrangement with the first display unit 11 on the upper surface 145 of the casing 14, and a display screen thereof faces in a second side surface direction opposite to the first side surface direction. Here, the second side surface direction is a direction in which the second side surface 142 of the casing 14 faces in an opposite direction to the X direction in which the first side surface 141 faces. The second display unit 12 displays commodity information or the like of a commodity which is purchased and registered to the customer or the like.

The second display unit 12 is provided with a second touch panel 121 used to operate the POS terminal 1. The second touch panel 121 detects a location operated (e.g., touched) on the second display unit 12 by an operator, and determines that an operation corresponding to a display element, which is displayed on the second display unit 12 and is touched by the operator, is input. Consequently, the second touch panel 121 receives an operation input by touching of a key, with the key displayed on the second display unit 12 being operated.

Each of the first display unit 11 and the second display unit 12 allows a screen direction to be adjusted to an angle at which the screen is easily viewed by the salesperson, the customer, or the like, in order to display various images to the salesperson, the customer, or the like. In other words, the screen direction of each of the first display unit 11 and the second display unit 12 may be parallel to the first side surface 141 and the second side surface 142, and may not be parallel to the first side surface 141 and the second side surface 142.

The noncontact card reader and writer 13 is disposed in a space between rear surfaces of the first display unit 11 and the second display unit 12 and on the upper surface 145 of the casing 14 (FIG. 2). The noncontact card reader and writer 13 performs writing and reading of information on an integrated circuit (IC) of a noncontact IC card through short-range wireless communication such as near field communication (NFC). Here, the noncontact IC card is a card used for, for example, an electronic settlement service. In other words, the noncontact card reader and writer 13 is a settlement unit which writes and reads information used for settlement related to a single transaction.

The noncontact card reader and writer 13 has a surface for reading information of the noncontact IC card held over the noncontact card reader and writer 13. The surface for reading information faces in a direction (a Y direction in the figure) which is orthogonal to the first side surface facing direction and the second side surface facing direction and in which the third side surface 143 of the casing 14. The noncontact card reader and writer 13 is located in the space between the first display unit 11 and the second display unit 12 on the upper side of the casing 14. Therefore, since the noncontact card reader and writer 13 are not located on the counter table 2, the POS terminal 1 can be installed at a narrower place. The noncontact card reader and writer 13 may perform writing and reading of information with respect to not only a noncontact IC card but also a portable terminal having an IC card.

The casing 14 is provided with a light-transmissive reading window 146 and a receipt discharge port 147 on the third side surface 143 orthogonal to the first side surface 141 and the second side surface 142. In other words, the reading window 146 and the receipt discharge port 147 face in the direction orthogonal to the direction in which the first display unit 11 and the second display unit 12 face.

The fourth side surface 144 is formed in an arc shape. However, the shape of the fourth side surface 144 is not limited to an arc shape, and may be a vertical wall surface in the same manner as the third side surface 143.

As shown in FIG. 2, the casing 14 is provided with a first rod 148 and a second rod 149 which extend in a substantially horizontal direction above the second side surface 142. The first rod 148 and the second rod 149 are bag hanging portions from which a bag holding a commodity purchased by the customer, or the like, is suspended. Since the first rod 148 and the second rod 149 are provided, the customer can easily put purchased commodities or the like into a bag using both hands. The first rod 148 and the second rod 149 are not limited to be located on the second side surface 142, and may be located on the first side surface 141 or the fourth side surface 144.

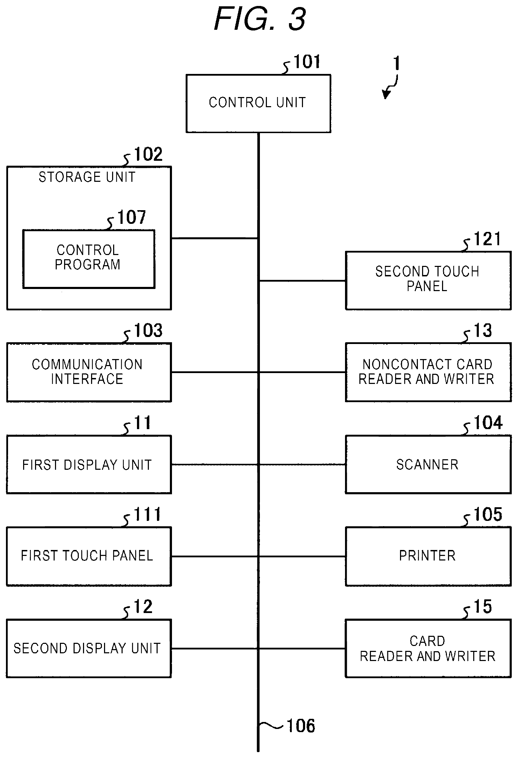

The casing 14 is provided with a scanner 104 and a printer 105 therein (refer to FIG. 3).

The scanner 104 is a reading unit which is located inside the reading window 146 of the third side surface 143 and reads a commodity code or the like which is identification information for identifying a commodity from the commodity which is a sales registration target. Specifically, the scanner 104 emits laser light to the outside of the casing 14 through the reading window 146. The scanner 104 receives reflected light of the laser light which is reflected at a commodity code or the like attached to the commodity through the reading window 146. The scanner 104 reads the commodity code or the like on the basis of the received reflected light. In other words, the scanner 104 reads the commodity code from the commodity held over in front of the reading window 146. The scanner 104 captures an image of a commodity, and may read a commodity code or the like from the captured image.

Here, the scanner 104 is preferably located at the upper portion of the third side surface 143. The scanner 104 is more preferably located at the same height as that of the first rod 148 and the second rod 149. Consequently, the salesperson or the customer need not lower a commodity taken out of a shopping basket to a position of the scanner 104 in order to allow reading of the commodity code of the commodity with the scanner 104.

The printer 105 is a printing unit which issues a receipt on which transaction details related to a single transaction are printed. The transaction details include commodity names, prices, a total amount of purchased commodities, and the like. The receipt discharge port 147 discharges the receipt issued by the printer 105. In other words, the printer 105 discharges the receipt in the direction (the Y direction in the figure) in which the third side surface 143 of the casing 14 faces.

The card reader and writer 15 is provided on the counter table 2. The card reader and writer 15 is a device which reads and writes information stored in a storage medium of a card used for settlement, such as a credit card. The card reader and writer 15 reads and writes information stored in a storage medium of a card inserted into a card insertion port 151. The card reader and writer 15 discharges the card inserted into the card insertion port 151 if a series of processes for settlement is completed.

In the POS terminal 1 having the above-described configuration, the noncontact card reader and writer 13, the scanner 104, and the printer 105 are located to be spaced apart from each other in a vertical direction (a Z direction in the figure) of the POS terminal 1. By arranging the noncontact card reader and writer 13, the scanner 104, and the printer 105 in the vertical direction, the necessary area for an installation of the POS terminal can be reduced.

In FIGS. 1 and 2, the noncontact card reader and writer 13 is configured to be located on the upper surface 145 of the casing 14, but is not limited thereto, and may be configured to be located on an upper part or a lower part of the casing 14 or inside the casing 14. Also in this case, the noncontact card reader and writer 13 is preferably located to be spaced apart from other devices (the scanner 104 and the printer 105) in the vertical direction.

In FIGS. 1 and 2, the card reader and writer 15 is located on the salesperson side (the first side surface 141 side) of the casing 14, but is not limited thereto, and may be located on the customer side (the second side surface 142 side), the upper part or the lower part of the casing 14 or inside the casing 14. Also in this case, the card reader and writer 15 is preferably located in a location spaced apart from other devices (the noncontact card reader and writer 13, the scanner 104, and the printer 105) in the vertical direction (the Z direction in the figure).

In FIGS. 1 and 2, the noncontact card reader and writer 13, the scanner 104, and the printer 105 are configured to be located in this order from the top of the POS terminal 1, but are not limited thereto, and the respective devices may be located in any order.

Next, a description will be made of a hardware configuration of the POS terminal 1 according to the present embodiment.

FIG. 3 is a block diagram illustrating an example of a hardware configuration of the POS terminal 1. The POS terminal 1 includes a control unit 101, a storage unit 102, a communication interface 103, the first display unit 11, the first touch panel 111, the second display unit 12, the second touch panel 121, the noncontact card reader and writer 13, the scanner 104, the printer 105, and the card reader and writer 15. The control unit 101, the storage unit 102, the communication interface 103, the first display unit 11, the first touch panel 111, the second display unit 12, the second touch panel 121, the noncontact card reader and writer 13, the scanner 104, the printer 105, and the card reader and writer 15 is connected to each other via a system bus 106.

The control unit 101 realizes various functions of the POS terminal 1 by controlling an operation of the entire POS terminal 1. The control unit 101 includes, for example, a central processing unit (CPU), a read only memory (ROM), and a random access memory (RAM). The CPU collectively controls an operation of the POS terminal 1. The ROM is a storage medium storing various programs or data. The RAM is a storage medium which temporarily stores various programs or rewrites various pieces of data. The CPU executes a control program 107 stored in the ROM, the storage unit 102, or the like by using the RAM as a work area.

The storage unit 102 is a storage device such as a hard disk drive (HDD) or a solid state drive (SSD). The storage unit 102 stores the control program 107. The control program 107 is an operating system or a program for realizing a function of the POS terminal 1. The control program 107 includes a program for realizing characteristic functions related to the present embodiment.

The communication interface 103 is an interface for communication with various external devices via a network.

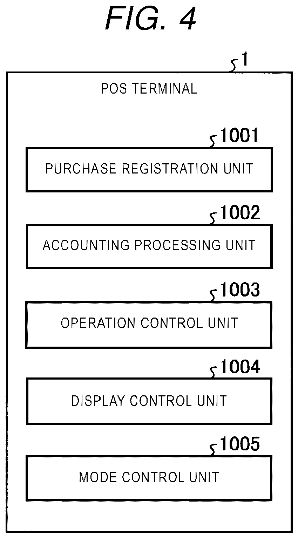

Next, the characteristic functions of the POS terminal 1 will be described. Here, FIG. 4 is a block diagram illustrating characteristic functional configurations of the POS terminal 1.

The control unit 101 of the POS terminal 1 develops the control program 107, which is stored in the storage unit 102, on the RAM, and operates according to the control program 107 so as to generate respective functional units illustrated in FIG. 4 on the RAM. Specifically, the control unit 101 of the POS terminal 1 includes, as the functional units, a purchase registration unit 1001, an accounting processing unit 1002, an operation control unit 1003, a display control unit 1004, and a mode control unit 1005.

The purchase registration unit 1001 controls a purchase registration process of registering a commodity to be sold. In other words, the purchase registration unit 1001 performs purchase registration on a commodity having a commodity code read by the scanner 104. The purchase registration unit 1001 calculates a total amount of prices of commodities subject to purchase registration related to a single transaction.

The accounting processing unit 1002 performs an accounting process on a commodity to be sold in cooperation with the noncontact card reader and writer 13 and the card reader and writer 15. Here, the accounting process is, for example, a process of paying prices of commodities or the like in a single transaction according to an electronic settlement service or the like.

The operation control unit 1003 controls the first touch panel 111 and the second touch panel 121 so as to receive various operation inputs. The operation control unit 1003 may receive various operation inputs from hardware buttons or the like provided in the POS terminal 1, not limited to the first touch panel 111 and the second touch panel 121.

The display control unit 1004 controls the first display unit 11 and the second display unit 12 to display various screens.

The mode control unit 1005 controls changing of a mode corresponding to an operator operating the POS terminal 1. In other words, the mode control unit 1005 controls a mode of switching between the display units displaying various operation screens used to operate the POS terminal 1. The mode includes a salesperson mode in which an operator is a salesperson, and a customer mode in which an operator is a customer.

The salesperson mode is a mode in which a salesperson performs operations for a purchase registration process and an accounting process. In other words, the display control unit 1004 displays a purchase registration screen on the first display unit 11 in the purchase registration process in a case of the salesperson mode. In the case of the salesperson mode, the display control unit 1004 displays an accounting screen on the first display unit 11 in the accounting process. The purchase registration screen is an operation screen for performing the purchase registration process in which a commodity having a commodity code read by the scanner 104 is subjected to sales registration. The accounting screen is an operation screen for performing an accounting process on a commodity having a commodity code read by the scanner 104. In a case of the salesperson mode, the operation control unit 1003 receives operation inputs related to the purchase registration process and the accounting process from the first touch panel 111.

The customer mode is a mode in which a customer performs operations for a purchase registration process and an accounting process. In other words, the display control unit 1004 displays a purchase registration screen and an accounting screen on the second display unit 12 in a case of the customer mode. Since a customer is not accustomed to operations related to the purchase registration process and the accounting process, the display control unit 1004 may not display the same purchase registration screen and accounting screen as in the salesperson mode on the second display unit 12. More specifically, the display control unit 1004 may display a screen in which explanations about detailed operation methods or the like are added to the purchase registration screen and the accounting screen. The display control unit 1004 may display a screen in which a part of the purchase registration screen and the accounting screen is changed in order to prevent an unintended operation input from being input. In a case of the customer mode, the operation control unit 1003 receives operation inputs related to the purchase registration process and the accounting process from the second touch panel 121.

If the operation control unit 1003 receives an operation input to change its mode to the customer mode during the salesperson mode, for example, through the first touch panel 111 or the second touch panel 121, the mode control unit 1005 changes a mode to the customer mode. In other words, the mode control unit 1005 changes a mode of displaying various operation screens on the first display unit 11 to a mode of displaying the various operation screens on the second display unit 12. If the operation control unit 1003 receives an operation input to change a mode to the salesperson mode during the customer mode, for example, through the first touch panel 111 or the second touch panel 121, the mode control unit 1005 changes the mode to the salesperson mode. In other words, the mode control unit 1005 changes the mode of displaying various operation screens on the second display unit 12 to a mode of displaying the various operation screens on the first display unit 11. Here, the operation input to change the mode is, for example, an operation of pressing a mode changing button for changing a mode, displayed on the first display unit 11 facing the salesperson side. The mode changing button is preferably displayed on the first display unit 11 regardless of the salesperson mode and the customer mode.

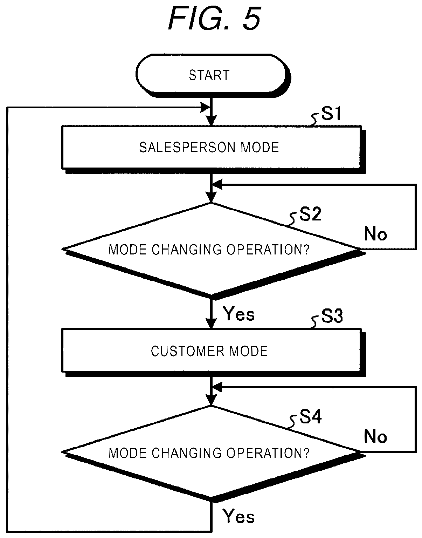

Next, a description will be made of a mode changing process performed by the POS terminal 1. Here, FIG. 5 is a flowchart illustrating an example of a mode changing process performed by the POS terminal 1 according to the embodiment.

The mode control unit 1005 of the POS terminal 1 sets the salesperson mode (Act 1).

Next, the operation control unit 1003 of the POS terminal 1 determines whether or not an operation input to change the mode is received (Act 2). If the operation input to change the mode is not received (No in Act 2), the POS terminal 1 waits for the operation input to change the mode to be received.

On the other hand, if the operation input to change the mode is received (Yes in Act 2), the mode control unit 1005 of the POS terminal 1 sets the customer mode (Act 3).

Next, the operation control unit 1003 of the POS terminal 1 determines whether or not an operation input to change the mode is received (Act 4). If the operation input to change the mode is not received (No in Act 4), the POS terminal 1 waits for the operation input to change the mode to be received.

On the other hand, if the operation input to change the mode is received (Yes in Act 4), the POS terminal 1 proceeds to Act 1. In other words, the mode control unit 1005 of the POS terminal 1 sets the salesperson mode.

Through the above-described procedures, the POS terminal 1 finishes the mode changing process.

As mentioned above, according to the POS terminal 1 related to the present embodiment, the first display unit 11 and the second display unit 12 are provided to face in opposite directions on the upper surface 145 of the casing 14. The noncontact card reader and writer 13, the scanner 104, and the printer 105 are located on the third side surface 143 parallel to the directions in which the first side surface 141 and the second side surface 142 face. Therefore, a salesperson and a customer can use the noncontact card reader and writer 13, the scanner 104, and the printer 105 with the counter table 2 interposed therebetween. Therefore, the POS terminal 1 can be used from either side.

In the embodiment, a description was made of a case where the scanner 104 and the printer 105 are located on the third side surface 143 of the casing 14. A description was made of a case where the noncontact card reader and writer 13 and the card reader and writer 15 face in the direction in which the third side surface 143 of the casing 14 faces. However, the scanner 104 and the printer 105 may be located on the fourth side surface 144 of the casing 14. The noncontact card reader and writer 13 and the card reader and writer 15 may face in the direction in which the fourth side surface 144 of the casing 14 faces.

The scanner 104, the printer 105, the noncontact card reader and writer 13, and the card reader and writer 15 may all face in different directions. The scanner 104, the printer 105, the noncontact card reader and writer 13, and the card reader and writer 15 may face in directions which are respectively different from the direction in which the third side surface 143 faces and the direction in which the fourth side surface 144 faces.

All or some of the scanner 104, the printer 105, the noncontact card reader and writer 13, and the card reader and writer 15 may be located on both of the third side surface 143 and the fourth side surface 144.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

The program executed in each device of the embodiment or the modification example is provided in a state of being incorporated into a storage medium (the ROM or the storage unit) provided in each device in advance, but is not limited thereto. For example, the program may be recorded on a computer readable recording medium such as a CD-ROM, a flexible disc (FD), a CD-R, or a digital versatile disk (DVD) in a file with an installable form or an executable form so as to be provided. The storage medium is not limited to a medium which is independent from a computer or an integrated system, and includes a storage medium which stores or temporarily stores the program which is delivered via a local area network (LAN) or the Internet and is downloaded.

The program executed in each device of the embodiment or the modification example may be stored in a computer connected to a network such as the Internet, and may be downloaded via the network so as to be provided, and may be provided or distributed via a network such as the Internet.

## Claims

1. A sales data processing device comprising:
a casing having a first side surface facing in a first direction, a second side surface facing in a second direction which is opposite to the first direction, and a third side surface facing a third direction orthogonal to the first and second directions;
a first display unit located on an upper surface of the casing so that a display screen thereof faces in the first direction;
a second display unit located on the upper surface of the casing so that a display screen thereof faces in the second direction; and
a reading unit located on the third side surface, and configured to read identification information for identifying a commodity from the commodity which is subjected to a sales registration.

2. The device according to claim 1, further comprising:
a control unit configured to display, on one of the first and second display units, an operation screen related to sales registration of the commodity corresponding to the identification information read by the reading unit, wherein
the control unit switches the display unit on which the operation screen is displayed between the first display unit and the second display unit.

3. The device according to claim 1 or 2, further comprising:
a bag hanger located on the second side surface and configured to hang a bag thereon.

4. The device according to claim 3, wherein
the bag hanger includes a rod member that extends in the second direction.

5. The device according to any one of claims 1 to 4, further comprising:
a printing unit configured to output a sheet, on which transaction details related to a single transaction are printed, in a direction orthogonal to the first and second directions.

6. The device according to claim 5, further comprising:
a discharge port located on the third surface and configured to discharge the sheet on which transaction details related to a single transaction are printed.

7. The device according to any one of claims 1 to 6, further comprising:
a settlement unit located in a space between the first display unit and the second display unit and configured to read information used for settlement related to a single transaction.

8. The device according to claim 7, wherein
the settlement unit has a surface for reading information used for settlement related to a single transaction, the surface facing in a direction orthogonal to the first and second directions.

9. The device according to any one of claims 1 to 8, wherein
the casing further has a fourth side surface opposing the third side surface, which is formed in an arc shape.

10. The device according to any one of claims 1 to 9, further comprising:
a settlement unit located inside of the casing and configured to read information used for settlement related to a single transaction.

11. The device according to any one of claims 1 to 10, further comprising:
a printing unit that outputs a sheet, on which transaction details related to a single transaction are printed, in a direction orthogonal to the first and second direction; and
a settlement unit configured to read information used for settlement related to a single transaction, wherein
the reading unit, the printing unit and the settlement unit are spaced apart from each other in a vertical direction.

12. A method for controlling a sales data processing device including a first display unit facing in a first direction, a second display unit facing in a second direction opposing to the first direction, and a reading unit configured to read identification information for identifying a commodity from the commodity which is subjected to a sales registration, comprising:
displaying an operation screen related to sales registration of a commodity corresponding to identification information read by the reading unit on one of the first and second display units, and
switching the display unit on which the operation screen is displayed between the first display unit and the second display unit.

13. The method according to claim 12, further comprising:
displaying a user interface configured to receive an operation input by an operator on one of the display units which is designated as the display for the operator;
receiving an operation, input onto the user interface, to switch the display unit on which the display for the operator is displayed; and
switching the display unit on which the operation screen is displayed between the first display unit and the second display unit when the operation input is received by the user interface.

14. The method according to claim 13, further comprising:
when displaying the user interface to receive the operation input to switch the display unit on which the operation screen is displayed, displaying the user interface on the display unit which is designated as a display unit for the operator, and displaying the user interface for a customer on the display unit which is designated as a display unit for the customer.

15. The method according to claim 14, wherein
the user interface for the operator includes an explanation for an operator to operate the user interface.
